# EUROPÄISCHE PATENTSCHRIFT

(11) **EP 0 862 982 B1**
(45) Veröffentlichungstag und Bekanntmachung des Hinweises auf die Patenterteilung: **27.06.2001**
(21) Anmeldenummer: 98100662.0
(22) Anmeldetag: 16.01.1998
(51) Int. Cl.: B29C 47/88

(54) **Vorrichtung zum Abkühlen eines aus einer Breitschlitzdüse auf eine Kühlwalze extrudierten Schmelzfilms**
Cooling an extruded film on a cooling drum
Refroidissement d'un film extrudé sur un tambour de refroidissement

(30) Priorität: 06.03.1997 DE 19709138
(43) Veröffentlichungstag der Anmeldung: 09.09.1998
(73) Patentinhaber: LINDAUER DORNIER GESELLSCHAFT M.B.H, 88129 Lindau (DE)
(72) Erfinder: Rutz, Andreas, Dr., 88131 Lindau (DE); Fischer, Thomas, 88131 Lindau (DE)

(56) Entgegenhaltungen:
- EP-A- 0 172 924
- DE-A- 3 635 302
- US-A- 4 386 897
- PATENT ABSTRACTS OF JAPAN vol. 015, no. 427 (M-1174), 30.Oktober 1991 & JP 03 180317 A (MITSUBISHI HEAVY IND LTD), 6.August 1991,
- PATENT ABSTRACTS OF JAPAN vol. 011, no. 360 (M-645), 25.November 1987 & JP 62 138225 A (MITSUI TOATSU CHEM INC), 22.Juni 1987,

## Beschreibung

Die Erfindung betrifft eine Vorrichtung nach den Merkmalen des Oberbegriffs von Patentanspruch 1.

Eine solche Vorrichtung ist zum Beispiel aus der DE-A-36 35 302 bekannt.

Zur Kühlung der Außenseite eines Schmelzefilms z.B. Polypropylen, wird dieser auf eine Kühlwalze extrudiert, die in einem Wasserbad angeordnet ist; siehe auch DE-A-36 35 302. Dadurch kann die Außenseite des Schmelzefilms vom umgebenden Kühlmedium, das in der Regel Wasser ist, gekühlt werden.
Zur Unterstützung können im Wasserbad ein oder mehrere Düsensysteme angeordnet sein, um Kühlwasser gezielt auf die Oberfläche des Schmelzefilms einwirken zu lassen, um damit vergleichsweise bessere Wärmeübergangswerte zu erreichen.

In der Kühlvorrichtung gemäß der DE-A-36 35 302 ist jedoch unmittelbar, nachdem der Schmelzefilm auf die Kühlwalze extrudiert ist, ein intensives Abkühlen des Schmelzefilms auf dessen Außenseite bis zum Eintauchen in ein Wasserbad nicht gegeben.
Um den Schmelzefilm vor der Weiterbehandlung weitgehend dehnungsarm aus der Kühlvorrichtung entnehmen zu können, ist dem ersten Wasserbad ein zweites Wasserbad mit dem gleichen Wasserspiegel-Niveau nachgeordnet.
Von erheblichem Nachteil ist, daß durch das zweite Wasserbad die Baulänge der Folienproduktionsanlage zunimmt und die Verweilzeit des Schmelzefilms in der Kühlvorrichtung relativ lang ist.

Bei Kühlwalzen, die im Wasserbad laufen, unterscheidet man Systeme, bei denen die Lagerung der Kühlwalze oberhalb eines Wasserspiegels angeordnet ist bzw. Systeme, bei denen die Lagerung der Kühlwalze unterhalb des Wasserspiegels liegt. Ziel der letztgenannten Anordnung ist es, mit möglichst kleinem Walzendurchmesser eine maximale Kühlleistung zu erreichen. Dies bedeutet, daß je tiefer die Kühlwalze im Wasserbad angeordnet ist, um so effektiver kann diese arbeiten; mit anderen Worten, um so mehr Schmelzefilm kann einer Weiterbehandlung in einer Folienproduktionsanlage zugeführt werden, was einem höheren Ausstoß an thermoplastischer Folie je Zeiteinheit bedeutet.

Der Wasserspiegel des Wasserbades kann bei einer Kühlwalzenanordnung gemäß der DE-A-36 35 302 jedoch aufgrund der geometrischen Gegebenheiten nicht beliebig erhöht werden. Zum einen sind für das Aufbringen des Schmelzefilms auf die Kühlwalze und für das Andrücken des Schmelzefilms an die Kühlwalze, um Lufteinschlüsse zwischen dem Schmelzefilm und der Kühlwalze zu verhindern, z.B. Luftrakelsysteme erforderlich. Zum anderen ist es erforderlich, die Kühlwalze von anhaftendem Wasser zu befreien und zu trocknen, bevor der Schmelzefilm auf die Kühlwalze aufgebracht wird. Dies erfordert einen gewissen Bauraum und ausreichend Neigung der zwischen dem Schmelzefilmauftrag und der Schmelzefilmabnahme liegenden Kühlwalzenfläche.
Diese Kühlwalzenfläche muß also, bevor auf diese der Schmelzefilm extrudiert wird, vom Wasser befreit werden. Der Schmelzefilm darf nur auf eine getrocknete Walze aufgebracht werden. Das Entwässern bzw. Trocknen geschieht im allgemeinen mit einer gummierten Abquetschwalze, die einen Großteil des Wassers vom Kühlwalzenmantel abquetscht und mit anschließend angeordneten Luftmessem, die unter hohem Druck das Wasser abblasen und in der Regel seitlich wegdrücken.

Ein relativ gutes Entwässern wird erreicht, wenn die Neigung der Mantelfläche der Kühlwalze im Vergleich zur Horizontalen relativ groß ist, weil durch die relativ große Neigung die betreffende Kühlwalzenmantelfläche rasch vom Wasser befreit werden kann. Bei einem hohen Wasserspiegel ist diese Neigung und der zur Verfügung stehende Mantelbereich der Kühlwalze gering und es ist schwierig, speziell auch bei steigender Geschwindigkeit der Kühlwalze, das mitgerissene Wasser zu entfernen. Dazu kommt noch der Effekt, daß mit geringer Neigung der betreffenden Mantelfläche Wasser um so leichter durch die relativ schnell laufende Kühlwalze mitgerissen wird.
Es ist also vorteilhaft, im Bereich der Abquetsch- und Trockenorgane eine möglichst große Neigung des betreffenden Walzenmantelbereiches und ausreichend Bauraum zur Verfügung zu haben, um die Kühlwalze sicher trocknen zu können.

Aus der EP-A-0 172 924 ist ferner eine Kühlvorrichtung für einen aus einer Breitschlitzdüse auf eine erste Kühlwalze extrudierten Schmelzefilm bekannt.
Bevor der Schmelzefilm einem Wasserbad zum weiteren Kühlen zugeführt wird, umschlingt dieser eine der ersten Kühlwalze nachgeordnete zweite Kühlwalze.
Nachteilig ist hier, daß unmittelbar, nachdem der Schmelzefilm auf die erste Kühlwalze extrudiert ist, ein intensives Abkühlen der Außenseite des Schmelzefilms nicht erfolgt. Dadurch wird eine zweite Kühlwalze erforderlich, mit der die Außenseite des Schmelzefilms gekühlt und schließlich ein Wasserbad erforderlich wird, um den Schmelzefilm dehnungsarm einer Weiterbehandlung zuführen zu können.

Aufgabe der Erfindung ist es, die beim Trocknen des Kühlwalzenmantels auftretenden Nachteile, aufgrund eines hohen Wasserspiegels des Wasserbades, zu vermeiden und dennoch einen maximal möglichen Kühleffekt auf den Schmelzefilm zu erreichen.

Des weiteren ist es Aufgabe der Erfindung, die Verweilzeit des Schmelzefilms in einer Kühlvorrichtung relativ niedrig zu halten und die Baulänge einer Folienproduktionsanlage positiv zu beeinflussen.

Die Aufgabe wird erfindungsgemäß durch die Merkmale des Patentanspruchs 1 gelöst.

Danach ist erfindungswesentlich, dass der Wasserspiegel eines zweiten Wasserbades derart zum Wasserspiegel des ersten Wasserbades partiell überhöht ist, dass die Kühlwalze im Bereich zwischen der Düsenöffnung der Breitschlitzdüse und dem Wasserspiegel des ersten Wasserbades das zweite Wassserbad passiert.
Dadurch, dass ein zweites Wasserbad mit Wasserspiegel oberhalb der Kühlwalzenlagerung liegt, ist bereits damit ein günstiger Kühleffekt auf den Schmelzefilm wirksam.
Der Schmelzefilm umschließt die Mantelfläche der Kühlwalze dabei in einem Winkel von mehr als 180°.

Der Wasserspiegel des ersten Wasserbades wird so gewählt, daß ausreichend Neigung und Bauraum zur Anordnung der Trockeneinheiten für die Kühlwalze gegeben ist.

Auf der der Breitschlitzdüse zugewandten Seite der Kühlwalze, also zur Schmelzefilm tragenden Mantelfläche der Kühlwalze gerichtet, ist wie bereits erwähnt erfindungsgemäß ein zweites Wasserbad vorgesehen, das die Kühlwalze teilweise umschließt. Die Seitenflächen bzw. den Stirnflächen der Kühlwalze stehen abdichtend mit der betreffenden Seitenwand des zweiten Wasserbades in Verbindung. Durch einen Zulauf wird das zweite Wasserbad mit Wasser gefüllt. Durch eine Regulierklappe an der Unterseite des zweiten Wasserbades kann dessen Wasserspiegel im Verhältnis Zulauf zu Ablauf nivelliert werden. Damit erreicht man im Bereich des noch heißen Schmelzefilms eine Umspülung mit Kühlwasser und damit eine effektive Kühlung des Schmelzefilms.

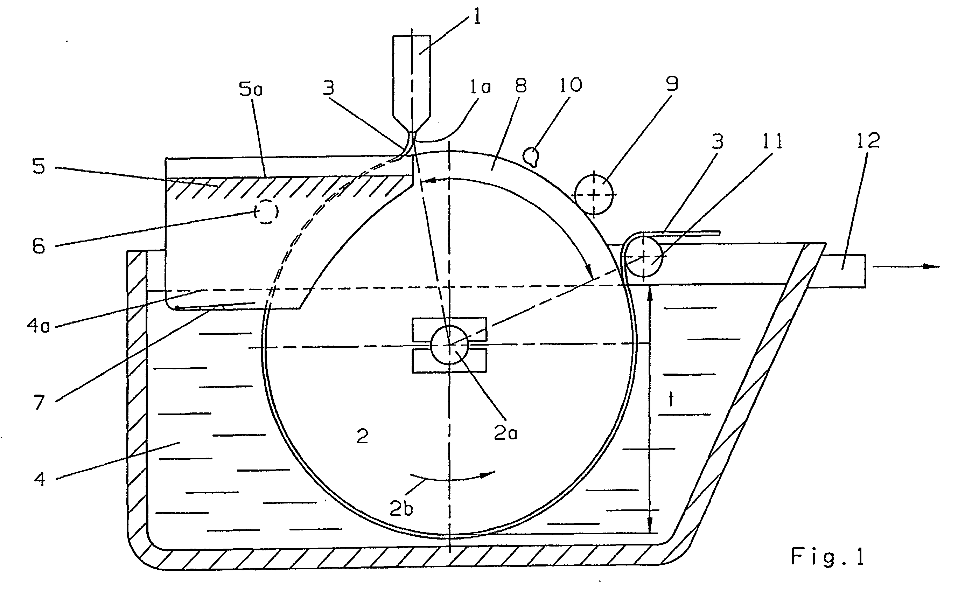

Die Erfindung wird nachfolgend anhand eines Ausführungsbeispiels erläutert.
Die einzige Figur zeigt eine schematische Darstellung der Kühlvorrichtung.

In einem ersten Wasserbad 4 ist eine in Richtung des Pfeiles 2b drehangetriebene Kühlwalze 2 angeordnet. Das Wasserbad 4 besitzt einen gegenüber der Walzenlagerung 2 relativ erhöhten Wasserstand t. Die Walzenlagerung 2a liegt damit unterhalb des Wasserspiegels 4a. Die Breitschlitzdüse 1 extrudiert einen Schmelzefilm 3 aus der Düsenöffnung la auf die Kühlwalze 2. Direkt danach taucht der Schmelzefilm 3 in ein zweites, erfindungsgemäß angeordnetes Wasserbad 5, das einen gegenüber dem Wasserspiegel 4a des ersten Wasserbades 4 partiell überhöhten Wasserspiegel 5a besitzt. Das Wasserbad 5 ist gegenüber der Kühlwalze 2, wie bereits erwähnt, durch eine nicht gezeigte Spaltdichtung abgedichtet. Das Wasserbad 5 weist einen Wasserzulauf 6 und einen Wasserablauf 7 auf. Zulauf 6 und Ablauf 7 sind so regelbar, daß ein konstanter Wasserspiegel 5a erhalten werden kann. Es kann entweder der Wasserzulauf oder der Wasserablauf geregelt werden. Hierzu gibt es die unterschiedlichsten Möglichkeiten (Ventile, Klappen etc.).
Das Abdichten des zweiten Wasserbades 5 gegenüber der Kühlwalze 2 erfolgt, wie gesagt, mittels einer Dichtung, die als Spalt- bzw. Labyrinthdichtung ausgebildet ist und die z.B. berührungslos mit der Kühlwalze 2 zusammenarbeiten kann. Wichtig ist, daß die Menge an Wasserzu- und -ablauf ausgeglichen ist.
Dem Bereich 8 der Kühlwalze 2 ist eine Abquetsch- und Trockeneinrichtung 9,10 zugeordnet.

Die Eintauchtiefe t der Kühlwalze 2 in das Wasserbad 4 ist so gewählt, daß mit Sicherheit auch bei schnell laufender Kühlwalze ein sicheres Trocknen der Kühlwalze 4 gegeben ist.

Der abgekühlte und dehnungsarme Schmelzefilm 3 wird über eine innerhalb oder außerhalb des Wasserbades 4 angeordnete Abnahmewalze 11 einer Weiterbehandlung zugeführt. Ergänzend sei noch erwähnt, daß die erfindungsgemäße Vorrichtung nicht nur eine wesentliche Verbesserung in Bezug auf den mit der DE-A-36 35 302 gegebenen Stand der Technik ist, sondern auch Anwendung finden kann in Kühleinrichtungen, die gemäß der EP-A-0 172 924 ausgebildet sind.

### ZEICHNUNGS-LEGENDE

- 01: Breitschlitzdüse
- 01a: Düsenöffnung
- 02: Kühlwalze
- 02a: Drehachse
- 02b: Pfeil
- 03: Schmelzefilm
- 04: Wasserbad
- 04a: Wasserspiegel
- 05: Wasserbad
- 05a: Wasserspiegel
- 06: Wasserzulauf
- 07: Wasserablauf
- 08: Mantelbereich
- 09: Abquetschwalze
- 10: Luftrakel
- 11: Abnahmewalze
- 12: Wasserablauf
- t: Eintauchtiefe

## Patentansprüche

1. Vorrichtung zum Abkühlen eines aus einer Breitschlitzdüse (1) auf eine drehangetriebene Kühlwalze (2) extrudierten Schmelzefilms (3), wobei die Drehachse (2a) der Kühlwalze (2) wahlweise derart innerhalb oder außerhalb eines ersten Wasserbades (4) angeordnet ist, dass die Kühlwalze wenigstens teilweise unterhalb des Wasserspiegel (4a) des ersten Wasserbades (4) liegt, **dadurch gekennzeichnet,** dass der Wasserspiegel (5a) eines zweiten Wasserbades (5) derart zum Wasserspiegel (4a) des ersten Wasserbades (4) partiell überhöht ist, dass die Kühlwalze (2) in einem Bereich zwischen der Düsenöffnung (la) der Breitschlitzdüse (1) und dem Wasserspiegel (4a) des ersten Wasserbades (4) das zweite Wasserbad (5) passiert.

2. Vorrichtung nach Anspruch 1, **dadurch gekennzeichnet,** dass das zweite Wasserbad (5) wenigstens einen Wasserzulauf (6) und einen in das erste Wasserbad (4) mündenden Ablauf (7) besitzt.

3. Vorrichtung nach Anspruch 1, **gekennzeichnet durch** Mittel, die einem schmelzefilmfreien, segmentartigen Mantelbereich (8) zwischen der Düsenöffnung (1a) der Breitschlitzdüse (1) und dem Ablösen des Schmelzefilms (3) von der Kühlwalze (2) zugeordnet sind.

4. Vorrichtung nach Anspruch 3, **dadurch gekennzeichnet,** dass die Mittel aus einer Abquetschwalze (9) und einem Luftrakel (10) bestehen.

5. Vorrichtung nach Anspruch 3, **dadurch gekennzeichnet,** dass der Mantelbereich (8) in Abhängigkeit von der Eintauchtiefe (t) der Kühlwalze (2) in das Wasserbad (4) variierbar ist.

## Claims

1. Apparatus for cooling a melt film (3), which is extruded from a sheet die (1) onto a rotationally driven cooling roller (2), the rotational axis (2a) of the cooling roller (2) optionally being arranged inside or outside a first water bath (4) in such a manner that the cooling roller is located at least partially below the water level (4a) of the first water bath (4), characterised in that the water level (5a) of a second water bath (5) is partially raised relative to the water level (4a) of the first water bath (4) so that the cooling roller (2) passes through the second water bath (5) in a region between the die opening (la) of the sheet die (1) and the water level (4a) of the first water bath (4).

2. Apparatus according to claim 1, characterised in that the second water bath (5) has at least one water inlet (6) and an outlet (7) which opens out into the first water bath (4).

3. Apparatus according to claim 1, characterised by means which are associated with a melt-film-free, segment-like outer region (8) between the die opening (la) of the sheet die (1) and the separation of the melt film (3) from the cooling roller (2).

4. Apparatus according to claim 3, characterised in that the means comprise a squeezing roller (9) and an air doctor blade (10).

5. Apparatus according to claim 3, characterised in that the outer region (8) can be varied dependent on the immersion depth (t) of the cooling roller (2) in the water bath (4).

## Revendications

1. Dispositif de refroidissement d'un film fondu (3) extrudé à partir d'une tuyère à large fente (1) sur un rouleau de refroidissement (2) entraîné de manière rotative, l'axe de rotation (2a) du rouleau de refroidissement (2) étant placé au choix à l'intérieur ou à l'extérieur d'un premier bain d'eau (4) de telle manière que le rouleau de refroidissement se trouve au moins en partie au-dessous du niveau d'eau (4a) du premier bain d'eau (4), caractérisé en ce que le niveau d'eau (5a) d'un second bain d'eau (5) est partiellement surélevé par rapport au niveau d'eau (4a) du premier bain d'eau (4), de telle sorte que le rouleau de refroidissement (2) passe le deuxième bain d'eau (5) dans une zone entre l'ouverture de tuyère (1a) de la tuyère à large fente (1) et le niveau d'eau (4a) du premier bain d'eau (4).

2. Dispositif selon la revendication 1, caractérisé en ce que le second bain d'eau (5) comporte au moins une arrivée d'eau (6) et une évacuation (7) débouchant dans le premier bain d'eau (4).

3. Dispositif selon la revendication 1, caractérisé par des moyens, qui sont associés à une zone de revêtement dépourvue de film fondu et segmentée (8) entre l'ouverture (1a) de la tuyère à large fente (1) et le décollement du film fondu (3) du rouleau de refroidissement (2).

4. Dispositif selon la revendication 3, caractérisé en ce que les moyens se composent d'un rouleau de scellement (9) et d'un racloir pneumatique (10).

5. Dispositif selon la revendication 3, caractérisé en ce que la zone de revêtement (8) peut varier en fonction de la profondeur d'immersion (t) du rouleau de refroidissement (2) dans le bain d'eau (4).
